**Europäisches Patentamt**

**European Patent Office**

**Office européen des brevets**

(11) Veröffentlichungsnummer: **0 502 417 A1**

# EUROPÄISCHE PATENTANMELDUNG

(21) Anmeldenummer: **92103336.1**

(22) Anmeldetag: **27.02.92**

(51) Int. Cl.5: **B41F 21/00**, B65H 5/22, B65G 51/03

(30) Priorität: **05.03.91 DE 4106904**

(43) Veröffentlichungstag der Anmeldung:
**09.09.92 Patentblatt 92/37**

(84) Benannte Vertragsstaaten:
**CH DE FR GB IT LI SE**

(71) Anmelder: **Koenig & Bauer Aktiengesellschaft Friedrich-Koenig-Strasse 4 Postfach 60 60 W-8700 Würzburg 1(DE)**

(72) Erfinder: **Wieland, Erich Georg Mittlerer Dallenbergweg 52 W-8700 Würzburg(DE)**

(54) **Düsenanordnung für die Bogenführung in Bogenrotationsdruckmaschinen.**

(57) Die Erfindung betrifft eine Düsenanordnung für die Bogenführung in Bogenrotationsdruckmaschinen, insbesondere für Schön- und Widerdruck, womit die bedruckten Bogen berührungslos abgestützt werden. Die Aufgabe der Erfindung besteht darin, eine Düsenanordnung mit geringem Luftbedarf und geringem apparatetechnischen Aufwand ein gleichmäßiges Luftpolster zwischen Bogen und Bogentragebene (7) zu schaffen. Erfindungsgemäß wird diese Aufgabe dadurch gelöst, daß die Düsenkörper (3) in Form von sich nach oben verjüngenden rotationssymmetrischen Kammern (4) ausgebildet sind.

FIG.1

Die Erfindung betrifft eine Düsenanordnung für die Bogenführung in Bogenrotationsdruckmaschinen, insbesondere für Schön- und Widerdruck, womit die bedruckten Bogen berührungslos abgestützt werden.

Allgemein bekannt ist es, Blasdüsen mit einer Blasöffnung senkrecht in der Bogentragebene einer Bogenrotationsdruckmaschine anzuordnen, mit welcher die bedruckten Bogen auf Abstand gehalten werden.

Nachteilig hierbei ist, daß die Bogen weggeblasen werden, da die Blasluft senkrecht auf die Bogen trifft. Dabei kann durch die ungleichmäßige Luftverteilung ein gleichmäßiger Abstand zur Bogentragebene nicht eingehalten werden. Es bilden sich Wellen, so daß Berührungen der Bogen mit der Bogentragebene gegeben sind.

Gemäß EP 01 83 928 B1 ist eine Vorrichtung zum Führen von ein- oder beidseitig bedruckten Bogen bekanntgeworden. Bei dieser Vorrichtung sind in den abfallenden Bogengängen gegeneinanderwirkende Blaslufteinrichtungen angeordnet, die die Bögen in der Schwebe halten sollen, so daß Bodenberührungen vermieden werden. Neben einem doppelt so hohen apparativen Aufwand, der durch die gegeneinanderwirkenden Blasluftsysteme bedingt ist, treten Querströmungen und Turbulenzen auf, die technisch schwer beherrschbar sind.

Allgemein bekannt ist weiterhin, daß große Düsenöffnungen eine große Luftmenge benötigen, um das Transportgut von Luftdüse und den Düsenrändern auf Abstand zu halten.

Gemäß DE-GM 86 13 443.4 sind Blasluftdüsen bzw. Blassaugdüsen bekannt, welche parallel in der Bogentragebene angeordnet sind, die eine Materialbahn auf Abstand halten und transportieren. Diese Blassaugdüsen weisen jeweils einen bogenförmigen Blasluftschlitz auf, dessen bogenförmiger oberer Rand in der Ebene der Bogentragebene liegt und dessen bogenförmiger unterer Rand zur Luftzufuhr hin abgesenkt liegt. An diesen bogenförmigen unteren Rand schließt sich in Blasluftrichtung eine schräge Ringsegmentfläche an, die von der Luft angeblasen wird. Die Strömung verläuft parallel zur Unterseite der Bogen bzw. der Materialbahn.

Nachteilig an diesen Blasluftdüsen ist, daß der Bereich des auf Abstand zu haltenden Bogens, welcher nicht vom Blasluftstrahl bestrichen wird, eine Berührung mit der Bogentragebene erfährt. Dies geschieht infolge des Eigengewichts des Bogens und des Vakuums, was sich - in Transportrichtung gesehen -, vor der Düse bildet. Dies wirkt sich dadurch nachteilig auf die Farbqualität beim Transportieren zweiseitig bedruckter Bogen aus, daß die frischbedruckte Oberfläche verschmiert werden kann. Bei demzufolge nicht ausbleibenden Berührungen mit Führeinrichtungen gibt es Farbablagerungen, die Anlaß zum Abschmieren nachfolgender Bogen geben.

Der Erfindung liegt die Aufgabe zugrunde, eine Düsenanordnung für die Bogenführung in Bogenrotationsdruckmaschinen, insbesondere für Schön- und Widerdruck, unter Verwendung von Blasluftdüsen in der Bogentragebene zum berührungslosen Abstützen von Bogen zu schaffen, bei dem sich der Luftstrom von der Düsenöffnung entlang der Bogentragebene überwiegend flächenhaft in Form eines Luftpolsters ausbildet.

Erfindungsgemäß wird diese Aufgabe bei einer Bogenrotationsdruckmaschine der gattungsgemäßen Art durch die kennzeichnenden Merkmale des Patentanspruches gelöst.

Auf Grund des tangentialen Anblasens der Bodenfläche des Düsenkörpers erhält die Luft einen Drallimpuls. Im Zentrum der Kammer des Düsenkörpers, in der Nähe der Luftaustrittsöffnung, steigt die Strömungsgeschwindigkeit gemäß Impulserhaltungssatz mit abnehmendem Radius hyperbolisch an, so daß bei geringer Luftzuführung ein Luftstrom mit hoher Rotationsgeschwindigkeit entsteht, der nach dem Verlassen der Luftaustrittsöffnung gleichmäßig radial und parallel zur Bogentragebene abströmt und somit zwischen Bogen und Bogentragebene ein gleichmäßiges Luftpolster schafft, so daß eine stabile Abstandshaltung der bedruckten Papierbogen mit geringem apparatetechnischen Aufwand gewährleistet ist. Ein Abschmieren von Farbe infolge Berührung mit der Bogentragebene wird somit vermieden.

Durch die Anordnung mehrerer in Transporteinrichtung parallel angeordneter Düsenleisten ist eine flächenhafte Abstandshaltung des Transportgutes möglich. Durch die Verstellbarkeit der Düsenleisten mittels Führungen können auch Bogen mit anderen Formaten berührungsfrei auf Abstand gehalten werden.

Ganz besonders vorteilhaft ist es, wenn die Luftaustrittsöffnungen der Düsenleisten einen ovalen Querschnitt besitzen. Dadurch kommt es in den Grenzbereichen, d. h. in den Bereichen, wo es zu Berührungen der einzelnen von den Luftaustrittsöffnungen austretenden Luftströmen kommt, nicht zu unerwünschten Verwirbelungen. Vorteilhafterweise weisen die Längsachsen dieser ovalen Luftaustrittsöffnungen eine Neigung zur Transportrichtung der zu transportierenden Bogen auf.

Die Erfindung soll nachstehend an einem Ausführungsbeispiel näher erläutert werden. In der zugehörigen Zeichnung zeigen:

Fig. 1: die perspektivische Darstellung einer Düsenanordnung mit einem Schnitt durch die erfindungsgemäße Düse;

Fig. 2: den Schnitt A-A nach Fig. 1;

Fig. 3: die schematische Darstellung der Ansicht B nach Fig. 1;

Fig. 3a: die schematische Darstellung einer Ansicht B nach Fig. 1, jedoch mit mehreren ellipsenförmigen Luftaustrittsöffnungen;

Fig. 4: die Seitenansicht eines Teils einer Bogenrotationsdruckmaschine mit der erfindungsgemäßen Düsenanordnung in einer Bogenauslage;

Fig. 5: die Ansicht C nach Fig. 4 ohne die Darstellung des abzulegenden Bogens sowie der Druck-, Gummi-, und Plattenzylinder.

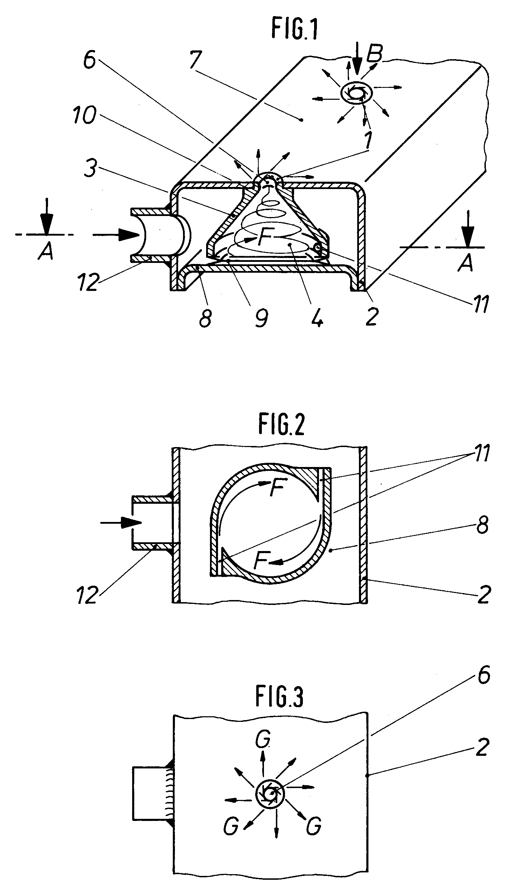

Gemäß Fig. 1 ist eine perspektivische Darstellung einer Düsenanordnung 1 gezeigt, welche aus einem Düsenkasten 2 mit etwa rechteckigem Querschnitt besteht. In der Längsachse des Düsenkastens 2 sind in bestimmten Abständen Düsenkörper 3 angeordnet, die aus einer rotationssymmetrischen Kammer 4 bestehen, die sich in Richtung der Luftaustrittsöffnung 6, also nach oben hin, verjüngen. Die Luftaustrittsöffnungen 6 schließen mit der Oberfläche des Düsenkastens 2 ab. Diese Oberfläche des Düsenkastens 2 wird auch als Bogentragebene 7 bezeichnet.

Der Düsenkörper 3 weist am Umfang seiner Bodenfläche 8 eine ringförmige Dichtlippe 9, beispielsweise aus Plaste, auf, die den Düsenkörper 3 gegen den Boden des Düsenkastens 2 abdichten. Eine Dichtfläche 10 dichtet den Düsenkörper 3 gegen die Bogentragebene 7 ab, damit Luft nur durch die Luftaustrittsöffnung 6 abströmt.

Weiterhin weist der Düsenkörper 3 gemäß Fig. 2 am Umfang seiner Bodenfläche 8 in Schnittebene A-A eine oder mehrere in Rotationsrichtung gleichsinnig durchströmte, tangential angeordnete Luftzufuhrkanäle 11 auf. Dabei ist zu beachten, daß die Summe der Querschnitte der Luftzufuhrkanäle 11 nicht größer sein darf als der Querschnitt der Luftaustrittsöffnung 6, da sonst eine Drallwirkung nicht erzielt wird. Der Düsenkasten 2 ist mit einem oder mehreren Lufteintrittsstutzen 12 versehen, die mit einer Blasluftversorgungsanlage der Bogenrotationsdruckmaschine über nicht dargestellte Druckluftleitungen verbunden sind.

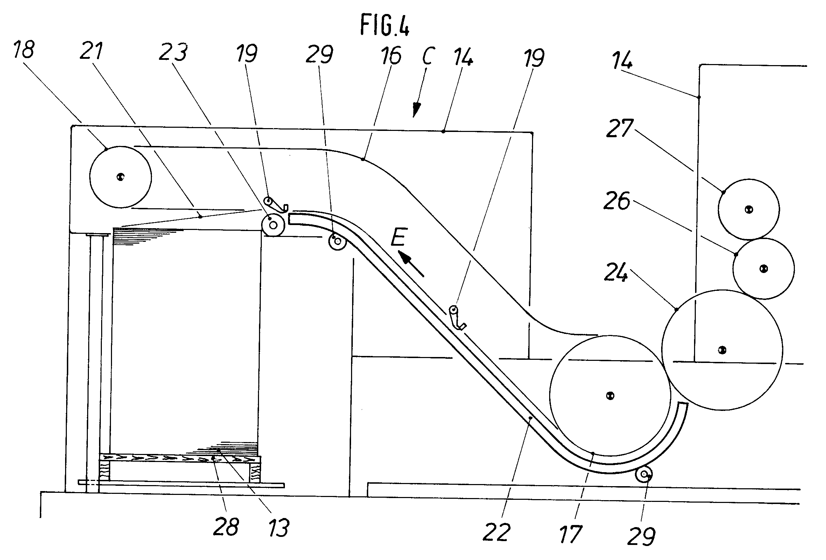

Gemäß Fig. 4 ist eine Seitenansicht eines Teils einer Bogenrotationsdruckmaschine mit dem Teil der Bogenablage auf einen Auslegestapel 13 dargestellt. In einem Maschinengestell 14 ist eine Bogentransporteinrichtung 16 zu sehen, wobei zwei parallellaufende nicht dargestellte Ketten über je zwei Kettenräder 17; 18 geführt sind. Die nicht dargestellten beiden Ketten sind mit zur Transportrichtung querverlaufenden Stäben verbunden, welche Greifereinrichtungen 19 für Bogen 21 tragen. Die Düsenkästen 2 sind in entsprechender Länge hintereinander angeordnet und als Düsenleiste 22 ausgebildet. Die Düsenleiste 22 paßt sich in ihrer Formgebung der Bogenauslage der Bogenrotationsdruckmaschine an. Weiterhin sind in dem Maschinengestell 14 eine pneumatische Bogenbremse 23, ein Druckzylinder 24, ein Gummizylinder 26 sowie ein Plattenzylinder 27 drehbar gelagert. Der aus Bogen 21 bestehende Auslegestapel 13 wird von einem Auslegestapeltisch 28 aufgenommen.

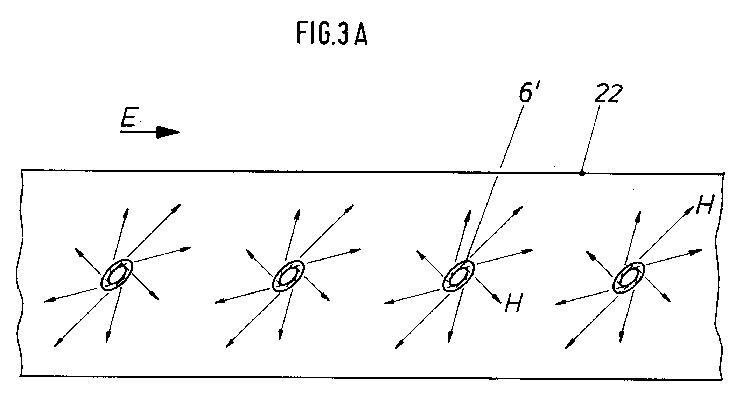

Gemäß Fig. 3a sind mehrere ellipsenförmige Luftaustrittsöffnungen 6' in der Düsenleiste 22 dargestellt. Die ellipsenförmige Ausbildung der Luftaustrittsöffnungen 6' hat die Wirkung, daß in Richtung der Längsachse der Ellipse eine größere Luftmenge die Luftaustrittsöffnung 6' verläßt als in der Querachse der Ellipse. Die austretende Luftmenge ist durch die Pfeilrichtung H dargestellt. Eine besonders vorteilhafte einstellbare Luftströmungsbildung erfolgt in den Grenzschichten zwischen zwei Luftaustrittsöffnungen 6', wenn die Längsachsen der ovalen Luftaustrittsöffnungen 6' winklig zur Transportrichtung E angeordnet sind, beispielsweise 45°.

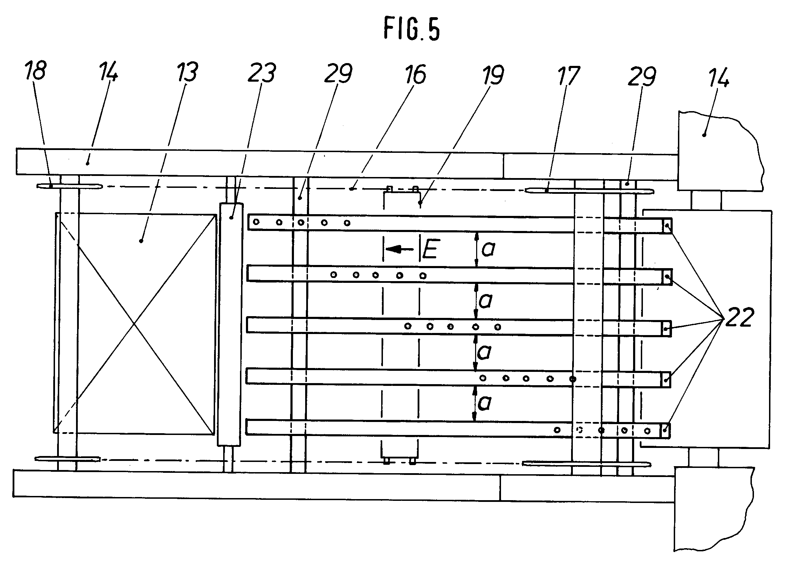

Gemäß Fig. 5 ist die Ansicht C nach Fig. 4 dargestellt. Dabei wurden der besseren Übersicht halber der Bogen 13, sowie die Zylinder 24; 26; 27 weggelassen. In diesem Ausführungsbeispiel sind fünf Düsenleisten 22 längs der Bogentransportrichtung gemäß Pfeil E dargestellt, die durch Führungen 29 quer zur Transportrichtung E im Abstand a zueinander verstellbar sind. Die Führungen 29 können beispielsweise mittels Spindeln oder Traversen verstellbar ausgebildet sein. Eine Veränderung des Abstandes a der Düsenleisten 22 zueinander ist insbesondere dann erforderlich, wenn Formatveränderungen vorgenommen werden, damit die günstigste Trageposition in bezug auf verschiedene Papierformatbereiche erreicht werden können.

Die Funktionsweise der erfindungsgemäßen Düsenanordnung ist wie folgt.

Von der Blasluftanlage der Bogenrotationsdruckmaschine tritt durch einen nicht dargestellten Luftschlauch gemäß Fig. 1 über einen oder mehrere Lufteintrittsstutzen 12 Luft in den Düsenkasten 2 ein. Dort strömt die Blasluft durch die tangential angeordneten Luftzufuhrkanäle 11 nach Fig. 2 in den Düsenkörper 3 mit der sich nach oben verjüngenden rotationssymmetrischen Kammer 4 ein, bewegt sich in Pfeilrichtung F spiralförmig nach oben und verläßt den Düsenkörper 3 durch die Luftaustrittsöffnung 6 in radialer Richtung G nach Fig. 3. Es entsteht ein Unterdruck, das Transportgut wird angesaugt und schwebt auf einem gleichmäßigen Luftpolster, hervorgerufen durch den Luftstrom in Pfeilrichtung G. Nach Fig. 4 und 5 ist die Anordnung der Düsenkästen 2 im Bogenauslauf einer Bogenrotationsdruckmaschine ersichtlich. Die Düsenleisten 22 sind dem Bogenauslauf angepaßt und können gemäß Fig. 5 in Pfeilrichtung a zueinander eingestellt werden.

Teileliste

| | |
|---|---|
| 1 | Düsenanordnung |
| 2 | Düsenkasten |
| 3 | Düsenkörper |
| 4 | Kammer |
| 5 | - |
| 6' | Luftaustrittsöffnung |
| 6 | Luftaustrittsöffnung |
| 7 | Bogentragebene |
| 8 | Bodenfläche des Düsenkörpers |
| 9 | Dichtlippe, ringförmig |
| 10 | Dichtfläche |
| 11 | Luftzufuhrkanal |
| 12 | Lufteintrittsstutzen |
| 13 | Auslegestapel |
| 14 | Maschinengestell |
| 15 | - |
| 16 | Bogentransporteinrichtung |
| 17 | Kettenrad |
| 18 | Kettenrad |
| 19 | Greifereinrichtung |
| 20 | - |
| 21 | Bogen |
| 22 | Düsenleiste |
| 23 | Bogenbremse |
| 24 | Druckzylinder |
| 25 | - |
| 26 | Gummizylinder |
| 27 | Plattenzylinder |
| 28 | Auslegestapeltisch |
| 29 | Führung |
| 30 | - |
| E | Pfeilrichtung |
| F | Pfeilrichtung |
| G | Pfeilrichtung |
| H | Pfeilrichtung |
| a | Abstand |

**Patentansprüche**

1. Düsenanordnung für die Bogenführung in Bogenrotationsdruckmaschinen, insbesondere für Schön- und Widerdruck unter Verwendung von Blasluftdüsen (3) in dar Bogentragebene (7) zum berührungslosen Abstützen von Bogen, dadurch gekennzeichnet, daß die Düsenkörper (3) in Form von sich in Blasrichtung (F) nach oben verjüngenden Kammern (4) ausgebildet sind.

2. Düsenanordnung nach Anspruch 1, dadurch gekennzeichnet, daß die Luftzufuhr zu den Düsenkörpern (3) durch einen Luftzufuhrkanal (11) erfolgt, der tangential an der Bodenfläche (8) der Düsenkörper (3) angeordnet ist.

3. Düsenanordnung nach Anspruch 1 und 2, dadurch gekennzeichnet, daß die Luftaustrittsöffnung (6) für die Blasluft an der Spitze der sich nach oben verjüngenden Kammer (4) befindet und in die Oberfläche der Bogentragebene (7) mündet.

4. Düsenanordnung nach Anspruch 1 bis 3, dadurch gekennzeichnet, daß die Luftaustrittsöffnungen (6) rund oder ellipsenförmig (6') ausgebildet sind.

5. Düsenanordnung nach Anspruch 1 bis 4, dadurch gekennzeichnet, daß die Längsachsen der ellipsenförmigen Luftaustrittsöffnungen (6') gegenüber der Transportrichtung (E) des Transportgutes winklig angeordnet sind.

6. Düsenanordnung nach Anspruch 5, dadurch gekennzeichnet, daß der Winkel 45° beträgt.

7. Düsenanordnung nach Anspruch 1 bis 6, dadurch gekennzeichnet, daß die Kammern (4) eine kegelstumpfförmige Form besitzen.

8. Düsenanordnung nach Anspruch 1 bis 6, dadurch gekennzeichnet, daß die Kammern (4) eine rotationssymmetrische Form oder eine annähernd rotationssymmetrische Form besitzen.

9. Düsenanordnung nach Anspruch 1 bis 3, dadurch gekennzeichnet, daß die Luftzufuhr zu den Düsenkörpern (3) durch mehrere Luftzufuhrkanäle (11) erfolgt.

10. Düsenanordnung nach Anspruch 1 bis 3 und 9, dadurch gekennzeichnet, daß die Summe der Querschnitte der Luftzufuhrkanäle (11) größer oder gleich dem Querschnitt der Luftaustrittsöffnung (6) ist.

11. Düsenanordnung nach Anspruch 1 bis 10, dadurch gekennzeichnet, daß mehrere Düsenkörper (3) in einem Düsenkasten (2) aneinandergereiht angeordnet sind, welcher über einen oder mehrere Lufteintrittsstutzen (12) mit Blasluft beaufschlagbar ist.

12. Düsenanordnung nach Anspruch 11, dadurch gekennzeichnet, daß mehrere Düsenkästen (2) aneinandergereiht als Düsenleiste (22) in den Bogenauslagen einer Bogenrotationsdruckmaschine angeordnet sind.

13. Düsenanordnung nach Anspruch 12, dadurch gekennzeichnet, daß mehrere Düsenleisten (22) parallel zur Bogentransportrichtung (E) angeordnet sind.

14. Düsenanordnung nach Anspruch 12 und 13, dadurch gekennzeichnet, daß die Düsenleisten (22) durch Führungen (29) zueinander (a) verstellbar sind.

15. Düsenanordnung nach Anspruch 14, dadurch gekennzeichnet, daß die verstellbaren Führungen (29) als Traversen oder Spindeln ausgebildet sind.

## FIG.1

## FIG.2

## FIG.3

FIG.3 A

FIG.4

# FIG.5

EP 0 502 417 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y,D | EP-A-0 183 928 (M.A.N. ROLAND DRUCKMASCHINEN)  * das ganze Dokument *  --- | 1-4,9-15 | B41F21/00 B65H5/22 B65G51/03 |
| Y | US-A-3 904 255 (NEUMANN, MACKIE)  * Spalte 4, Zeile 6 - Zeile 25; Abbildungen 3,4 *  * Spalte 8, Zeile 6 - Zeile 7; Abbildung 13 *  ----- | 1-4,9-15 | |

**RECHERCHIERTE SACHGEBIETE (Int. Cl.5 )**

B41F
B65H
B65G
F26B

Der vorliegende Recherchenbericht wurde für alle Patentansprüche erstellt

| Recherchenort | Abschlußdatum der Recherche | Prüfer |
|---|---|---|
| DEN HAAG | 03 JUNI 1992 | EVANS A.J. |